# EUROPEAN PATENT SPECIFICATION

(11) **EP 1 912 354 B1**
(45) Date of publication and mention of the grant of the patent: **13.06.2012**
(21) Application number: 06746527.8
(22) Date of filing: 17.05.2006
(51) Int. Cl.: H04B 10/10, H04B 10/00, H04B 10/105, H04B 10/22, H05B 37/02

(54) **DATA TRANSMITTING APPARATUS AND DATA RECEIVING APPARATUS**
DATENSENDEVORRICHTUNG UND DATENEMPFANGSVORRICHTUNG
APPAREIL D ÉMISSION DE DONNÉES ET APPAREIL DE RÉCEPTION DE DONNÉES

(30) Priority: 20.05.2005 JP 2005147968
(43) Date of publication of application: 16.04.2008
(73) Proprietor: Nakagawa Laboratories, Inc., Tokyo 141-0031 (JP)
(72) Inventor: NAKAGAWA, Masao, Yokohama-shi Kanagawa 225-0001 (JP); HARUYAMA, Shinichiro, Izu-shi Kanagawa 249-0004 (JP)
(74) Representative: Hofer, Dorothea
(86) International application number: PCT/JP2006/309824
(87) International publication number: WO 2006/123697

(56) References cited:
- WO-A2-02/25842
- JP-A- 01 122 220
- JP-A- 09 098 193
- JP-A- 2000 092 012
- JP-A- 2000 134 186
- JP-A- 2000 332 688
- JP-A- 2003 122 433
- US-A1- 2005 062 440
- US-B2- 6 542 270

## Description

The present invention relates to a data transmission apparatus that uses light radiated from lighting equipment through the air for communication.

New devices such as light emitting diodes (LEDs) or organic electroluminescence used as a light source for lighting equipment or display devices have been developed. Lighting equipment utilizes visible light itself radiated from such devices as an illuminative light source. Regarding display devices, LED and organic electroluminescence are considered to be used as a light source for back lights of a liquid crystal display, and are already used in a few applications.

Lighting equipment and display devices need lighting control. For example, in the case of lighting equipment, light sources thereof need lighting control so as to adjust brightness in the room. Meanwhile, the display devices need the following two types of controls. The first type is to adjust brightness of the display devices. The second type is, when different LEDs outputting primary colors such as red, green, and blue are used as light sources of the display devices, to control illuminance of the LEDs in respective colors because the color white needs to be synthesized through adjusting the mixing ratio.

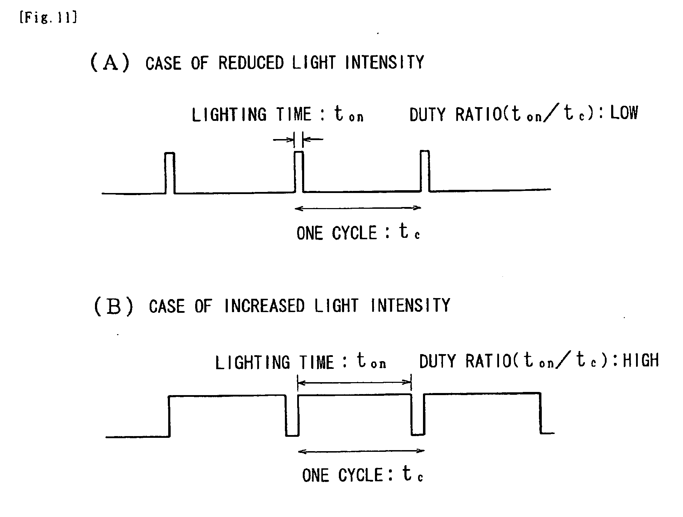

PWM (Pulse Width Modulation) is a typical method for lighting control of light sources such as LEDs or organic electroluminescence. FIG. 11 explains an example of lighting control through PWM. PWM is used to generate a series of pulse signals of several tens of Hz or greater with which flickering is undetected by the human eye, and change the period of time a pulse signal is on so as to change the duty ratio, thereby adjusting average light intensity.

According to the example shown in FIG. 11(A), for example, since the period of time a pulse signal is on is short and lighting time of the LED or the like is short accordingly, the human eye recognizes low-light intensity. On the other hand, according to FIG. 11(B), since the period of time a pulse signal is on is long and lighting time of the LED or the like is long accordingly, the human eye recognizes high-light intensity.

Meanwhile, development of lighting equipment, a display device, and other techniques for communication using illuminative light radiated through the air from a variety of light sources continues. Such communication techniques using illuminative light are disclosed in Patent Reference 1, for example. However, since the aforementioned lighting equipment, display device and the like need lighting control, the S/N ratio simply decreases as the intensity of light decreases, and thus communication quality deteriorates. Therefore, development of a quality communication method while conducting lighting control of the light source has been expected.
Patent Reference 1: Japanese Unexamined Patent Application Publication No. 2004-147063

US-6,542,270 B2 discloses a data transmission apparatus comprising a light source for radiating light through the air and a light source driving means for driving the light source. The light of two or more lamps is overlapped.

US 2005/0062440 A1 discloses a system and a method for controlling illumination sources with different levels of the output light by PWM means and LED driving means. The output light is digitally controlled by input data, but the outgoing light is not used and has no intended use for data transmission.

WO 02/25842 A2 discloses a universal lighting network method and system, wherein a data signal and a PWM signal are used as separate signals. A pulse position modulation (PPM) is applied to only the data signal.

It is the technical object of the present invention to provide a data transmission apparatus capable of transmitting data and controlling the brightness at the same time and independently therefrom, while the quality of the data transmission is kept high. This object is achieved by the data transmission apparatus having the features of claim 1. The invention is further developed as defined in the dependent claims.

### [RESULTS OF THE INVENTION]

According to the present invention, since transmission of data is possible without changing the pulse width of the PWM signal, average light power may be kept constant. Therefore, it is never seen as flickering to the human eye during data transmission, and quality data communication may be carried out even using conventional lighting control.

Moreover, in the case where an oscillator generates a signal oscillating with a subcarrier frequency and a subcarrier system modulates light intensity, the reception side converts light to an electric signal. Afterwards, an electric filter may select one with a specific frequency, thereby preventing interference between different lighting equipment.

Furthermore, it is possible to transmit multiple different data sequences at the same time using lights of different wavelengths radiated from, for example, light sources of three primary colors.

### BRIEF DESCRIPTION OF DRAWINGS

FIG. 1 is a block diagram showing a first embodiment according to the present invention;
FIG. 2 explains an example of a signal waveform, which drives a light source, according to the first embodiment of the present invention;
FIG. 3 is a block diagram showing a modified example of the first embodiment according to the present invention;
FIG. 4 explains an example of a signal waveform, which drives a light source according to the modified example of the first embodiment according to the present invention;
FIG. 5 is a block diagram showing a second embodiment according to the present invention;
FIG. 6 explains an example of a signal waveform, which drives a light source according to the second embodiment according to the present invention;
FIG. 7 is a block diagram showing a third embodiment according to the present invention;
FIG. 8 explains an example of a signal waveform, which drives a light source according to the third embodiment according to the present invention;
FIG. 9 is a block diagram showing a fourth embodiment according to the present invention;
FIG. 10 explains an example of a signal waveform, which drives a light source according to the fourth embodiment according to the present invention; and
FIG. 11 explains an example of lighting control with a PWM system.

### [Description of the Reference Numerals]

1 ... illuminating device; 2... data receiver; 11 ... PWM circuit; 12 ... phase inverter; 13 ... light source driver circuit; 14 ... light source; 15 ... rising edge timing control circuit; 16 ... synchronization signal light source; 17 ... oscillator; 21 ... optical sensor; 22 ... phase detection circuit; 23 ... filters; 31 ... visible light transmission filter; 32 ... data reception optical sensor; 33 ... infrared light transmission filter; 34 ... synchronization signal optical sensor; 35 ... synchronization signal detection circuit; 36 ... rising edge timing detection circuit; 41 ... envelope detection circuit

### BEST MODE FOR CARRYING OUT THE INVENTION

The present invention is described forthwith. Systems for modulation in conjunction with lighting control for lighting equipment and a display device (hereafter, called illuminating device), which are data transmission apparatus according to the present invention, to conduct data communication are categorized according to synchronization signal, into a system not transmitting a synchronization signal (non-sync system) and system separately transmitting a synchronization signal (sync system). Meanwhile systems changing data to be transmitted to an optical signal include a system of directly changing a data signal to a light intensity (called baseband system) and a system of superimposing a data signal on a subcarrier (i.e., subcarrier system). By combining these systems, the following four systems are available:
(A) Non-sync baseband system
(B) Sync baseband system
(C) Non-sync subcarrier system
(D) Sync subcarrier system
These are described forthwith.

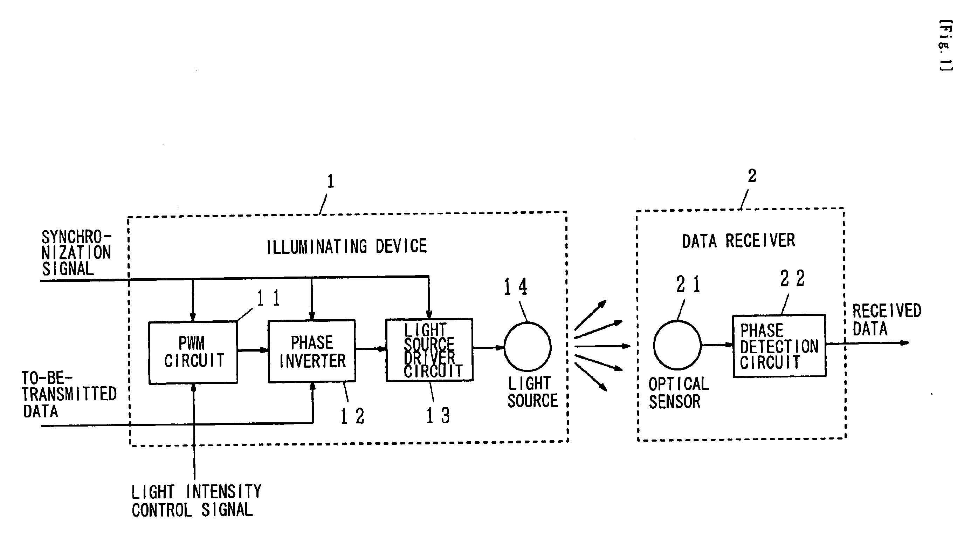

FIG. 1 is a block diagram showing a first embodiment according to the present invention. In this drawing, 1 denotes an illuminating device, 2 denotes a data receiver, 11 denotes a PWM circuit, 12 denotes a phase inverter, 13 denotes a light source driver circuit, 14 denotes a light source, 21 denotes an optical sensor, and 22 denotes a phase detection circuit. With this first embodiment, a non-sync baseband system is described. The non-sync baseband system is a baseband system of not transmitting a synchronization signal.

The illuminating device 1 is a data transmission apparatus according the present invention and is constituted by the PWM circuit 11, the phase inverter 12, the light source driver circuit 13, and the light source 14. The PWM circuit 11 controls period of time the pulse signal is on according to light intensity as shown in FIG. 11 in conformity with an input light intensity control signal, for example, thereby generating a PWM signal.

The phase inverter 12 phase-inverts the PWM signal output from the PWM circuit 11 when an input to-be-transmitted data signal 0 or 1 is a certain value.

The light source driver circuit 13 drives the light source 14 in conformity with a signal output from the phase inverter 12.

The light source 14 is a semiconductor light emitting device, such as an LED or organic electroluminescence, and is driven by the light source driver circuit 13, thereby emitting light. This light source 14 is used as illuminative light for lighting equipment, for example, while it is used as a light source for the back light of a display device, for example,.

The data receiver 2 receives light radiated from the illuminating device 1 and then obtains data therefrom. In this embodiment, the data receiver 2 is constituted by the optical sensor 21, the phase detection circuit 22, and other related circuits.

The phase detection circuit 21 receives light radiated from the illuminating device 1 and then converts it to an electric signal. The phase detection circuit 22 detects the phase of the electric signal output from the optical sensor 21, determines whether it is either 0 or 1 based on change in phase, and then outputs a received data signal.

An example of an operation of the first embodiment according to the present invention is described forthwith. A light intensity control signal corresponding to a desired intensity of light is input to the PWM circuit 11. The PWM circuit 11 generates a PWM signal as shown in FIG. 11, for example.

The generated PWM signal is transmitted to the phase inversion circuit 12, next. A to-be-transmitted data signal or a digital value made of 0s and/or 1s is input to the same phase inverter 12. The phase inverter 12 outputs the PWM signal directly when the to-be-transmitted data signal is 0, for example, whereas it outputs an inverted signal of the PWM signal when the to-be-transmitted data signal is 1. Needless to say that the phase may be inverted when the to-be-transmitted data signal is 0, whereas it may not be inverted and output when 1.

The light source driver circuit 13 generates a driving electric current in proportion to a signal from the phase inverter 12, which then drives a light source such as LED or organic electroluminescence to emit light.

In the data receiver 2, the optical sensor 21 converts light radiated from the illuminating device 1 to corresponding electric signal, and the phase detection circuit 22 detects the phase of the electric signal and outputs a received data signal.

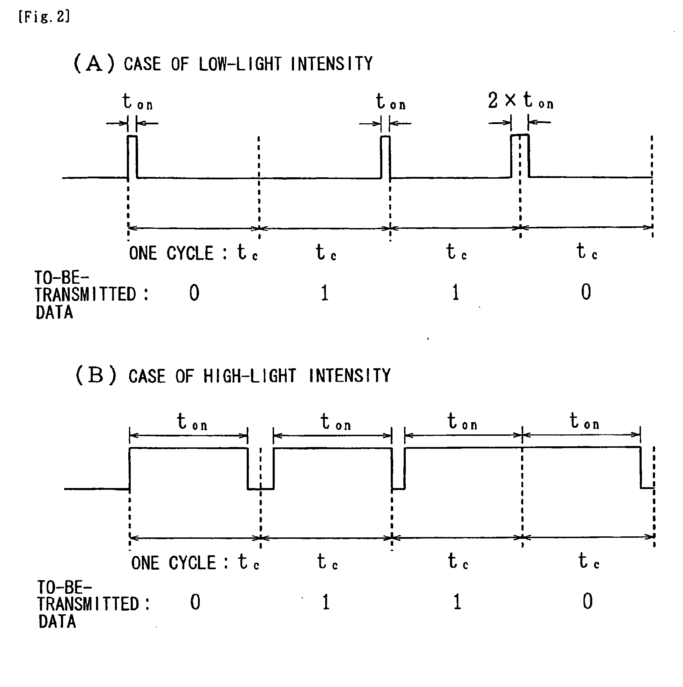

FIG. 2 is a diagram explaining an example of a signal waveform, which drives the light source of the first embodiment according to the present invention. FIG. 2(A) shows the case of low-light intensity while FIG. 2(B) shows the case of high-light intensity. They may be seen to have different wavelengths; however, they both show the case of transmitting the same to-be-transmitted data.

In the case of low-light intensity (in FIG. 2(A)), the PWM signal has a waveform with a short pulse width t_{o n} comprising short ON periods and the remaining OFF periods. This is the same as the case shown in FIG. 11 (A); however, with this first embodiment of the present invention where timing of a pulse signal turning ON depends on to-be-transmitted data, when the to-be-transmitted data is 0, the pulse signal turns on at the beginning of a cycle t_{c} and turns off partway through the cycle. On the other hand, when the to-be-transmitted data is 1, the pulse signal turns on partway through the cycle t_{c} and turns off at the end thereof. In other words, when the to-be-transmitted data is 1, the signal waveform has an inverted form of the PWM signal in phase for the to-be-transmitted data of 0.

In the case of high-light intensity (shown in FIG. 2(B)), the PWM signal has a waveform with a long pulse width t_{o n} and short OFF periods. How to phase-invert in this case is the same as in case of the short pulse width. With this embodiment, when the to-be-transmitted data is 0, the pulse signal turns on at the beginning of the cycle t_{c} and turns off partway through the cycle while when the to-be-transmitted data is 1, the pulse signal turns on partway through the cycle t_{c} and turns off at the end thereof.

The data receiver 2 receives only data signals but does not receive synchronization signals, and therefore it must determine sync timing from data signals. As shown in FIG. 2(A), the case of maintaining the on state only for a period of 2×t_{o n} occurs only when it crosses over a boundary of two adjacent cycles. Therefore, it is possible to easily detect a starting time of one cycle by observing the moment when the pulse signal turns on during a period of 2×t_{o n} . Note that the same holds for the case where the period of 2 * t_{o n} is short, as shown in FIG. 2(B).

Since the light radiated from the illuminating device 1 is an optical pulse signal as described above, the human eye may recognize average light intensity as long as the frequency of the light is high. Therefore, such a waveform shown in FIG. 2(A) is detected as low-light intensity, whereas such a waveform shown in FIG. 2(B) is detected as high-light intensity. However, since pulse height (i.e., amount of electric current driving the light source) does not change even if light intensity is changed, intensity of emitted light that the data receiver 2 receives never depends on lighting control. Therefore, even when the human eye detects low-light intensity, quality communication may be secured.

Note that since data transmission speed is determined based on the period of one cycle generated by the PWM circuit 11, a shortened cycle allows data communication at a higher speed.

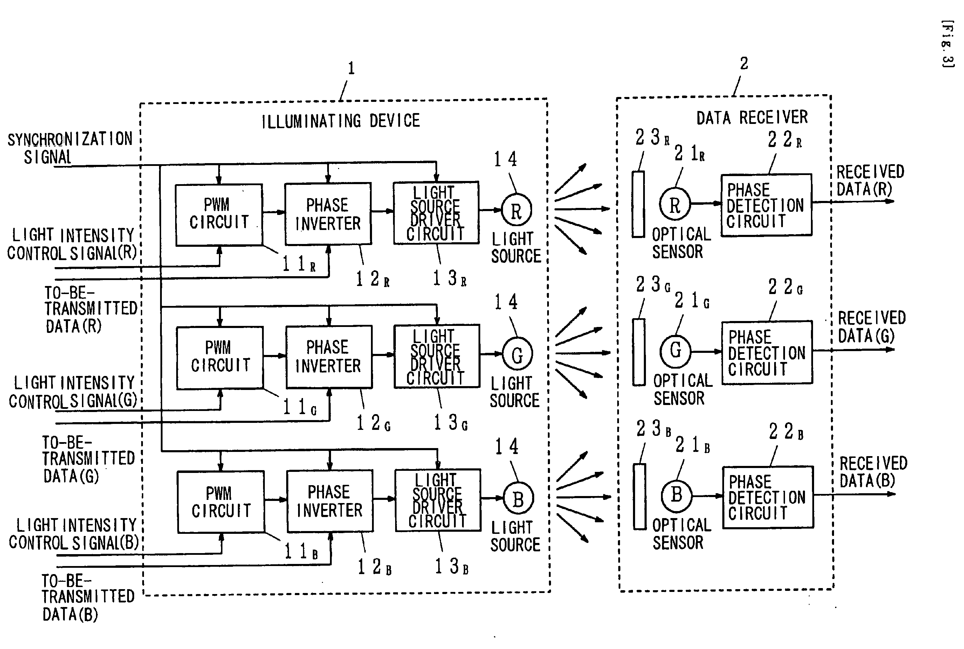

FIG. 3 is a block diagram showing a modified example of the first embodiment according to the present invention. In this drawing, 23 denotes a filter. While the embodiment shown in FIG. 1 shows the case where the light source 14 uses a monochromatic light source, a multichromatic light source may be used instead. Light sources for LCD backlights generally use three primary colors of red, green, and blue, for example. These light sources are characterized in that red, green, and blue spectrums scarcely overlap with one another. Therefore, use of optical filters allows easy distinction of these three light sources. Moreover, use of this characteristic allows prevention of flickering light, prevention of changes in color over time, and simultaneous transmission of three different kinds of data.

The example shown in FIG 3 comprises the structure shown in FIG. 1 for each of red, green, and blue. Each of the circuits is the same as in FIG. 1. Note that the data receiver 2 includes filters 23 for respective colors for receiving each of separated lights in red, green, and blue.

An operation of the modified example of the first embodiment according to the present invention is briefly described forthwith. The illuminating device 1 receives a light intensity control signal and to-be-transmitted data for each light in red, green, and blue. Pulse width modulation (PWM) is conducted separately for each of red, blue, and green lights based on the light intensity control signal; phase inversion of a PWM signal is then conducted based on the to-be-transmitted data; and processing for driving the light sources are carried out, resulting in red, green, and blue light sources 14R, 14G, and 14B emitting the respective color lights. Intensity of each of red, green, and blue light is adjusted in conformity with light intensity control signals for the respective colors.

In the data receiver 2, red, green, and blue filters 23R, 23G, and 23B pass only respective colors of light so as to distinguish three different colors of lights, sensors 21 R, 21 G, and 23B convert them to electric signals, and phase detection circuits 22R, 22G, and 22B demodulate them, resulting in received data. Through such processing, data transmitted in parallel for each color of light may be received without interference. Moreover, even if respective colors of lights are subjected to lighting control, quality communication may be ensured.

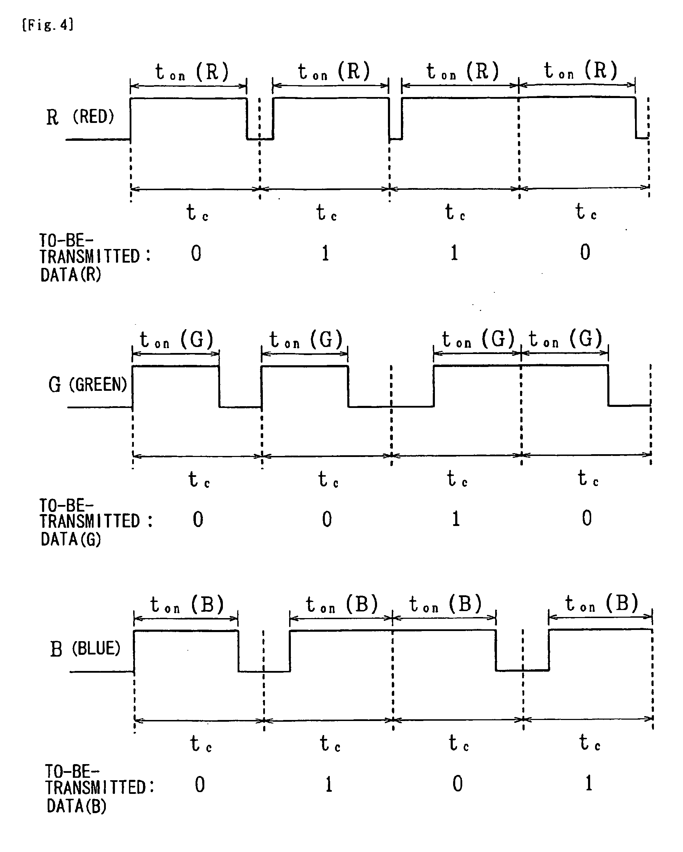

FIG. 4 is a diagram explaining an example of a signal waveform, which drives the light sources of the modified example of the first embodiment according to the present invention. FIG. 4(A) shows an example of a red light signal, FIG. 4(B) an example of a green light signal, and FIG. 4(C) an example of a blue light signal. As shown in FIG. 4, the red, green, and blue light sources emit respective lights having respective independent pulse widths t_{o n}, which allows adjustment of the color and brightness of emitted light Moreover, they are subjected to phase inversion in accordance with respective independent pieces of to-be-transmitted data. Therefore, three pieces of data may be transmitted in parallel at the same time. In addition, as long as one cycle (t_{c}) is short enough, the human eye does not sense flickering, changes in brightness, and changes in color over time due to pulse width modulation.

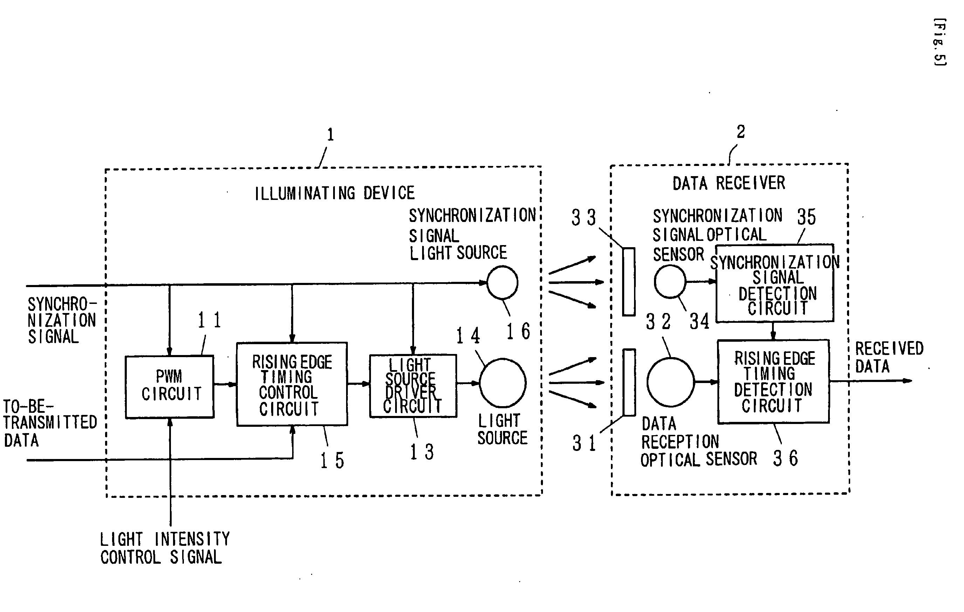

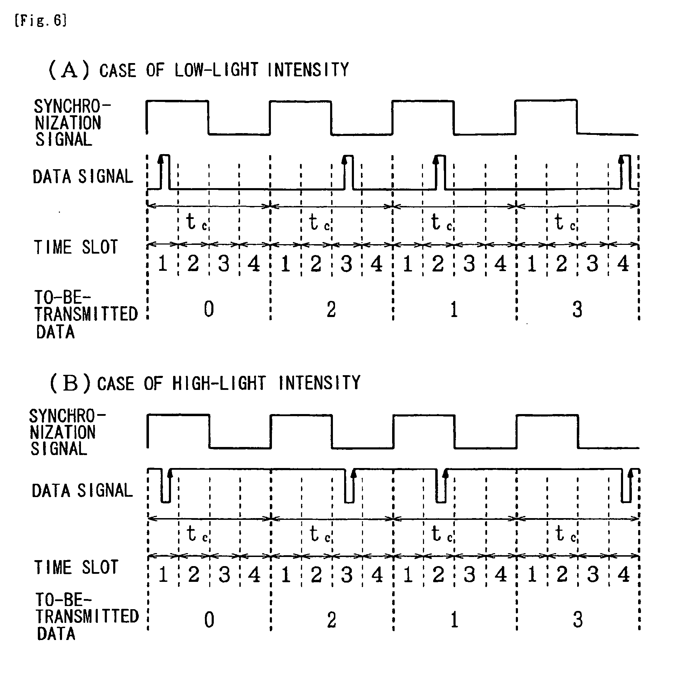

FIG. 5 is a block diagram showing a second embodiment according to the present invention while FIG. 6 is a diagram explaining an example of a signal waveform, which drives a light source in the same way. In these drawings, the same reference numerals are attached to the same elements as in FIG. 1 and repetitive descriptions thereof are omitted. 15 denotes a rising edge timing control circuit; 16 denotes a synchronization signal light source; 31 denotes a visible light transmission filter; 32 denotes a data reception optical sensor; 33 denotes infrared light transmission filter; 34 denotes synchronization signal optical sensor; 35 denotes a synchronization signal detection circuit; and 36 denotes a rising edge timing detection circuit. This second embodiment exemplifies a sync baseband system. The sync baseband system is a system of separately transmitting a synchronization signal using a baseband method, where the reception side must receive a visible light modulated based on data as well as the synchronization signal separately. In order to prevent interference of an optical synchronization signal with optically transmitted data, the former wavelength should differ from the latter, for example. The example here shows transmission of the synchronization signal using infrared light. Needless to say that the synchronization signal may be transmitted using other methods.

When a synchronization signal is transmitted from the transmission side, phase is simply inverted so as for information to be sent as with the first embodiment, and in addition, much more information may be sent by detecting timing of a rising edge in transmitted data.

For example, with the example shown in FIG. 6, assuming that from a rising edge of the synchronization signal to the next rising edge of the same represents one symbol, that one symbol is divided into four time slots. In this case, data may be transmitted based on which time slot includes the data signal rising edge. In other words, corresponding four time slots to respective pieces of data 0, 1, 2, and 3 allows one symbol to carry two bits of data (i.e., one of values 0, 1, 2, and 3). In the example shown in FIG. 6, since the rising edges of drive signals (data signals) are included in respective time slots 1, 3, 2, and 4, pieces of data 0, 2, 1, and 3 may be transmitted. Note that the number of time slots in a single symbol is not limited to four, and may be three or less, or five or greater.

FIG. 6(A) shows the case of low-light intensity while FIG. 6(B) shows case of high-light intensity. Since in either case, the difference is merely which time slot includes the rising edge, where if ON- and OFF-periods within the same single cycle correspond to light intensity, observed light intensity never depends upon the position of the rising edge. Therefore, a large amount of data may be transmitted independent from light intensity control.

In the structure shown in FIG. 5, the illuminating device 1 is constituted by a rising edge timing control circuit 15 and a synchronization signal light source 16 as well as a PWM circuit 11, a light source driver circuit 13, and a light source 14. The rising edge timing control circuit 15 controls the position of the rising edge of the PWM signal output from the PWM circuit 11 in conformity with to-be-transmitted data, as shown in FIG 6. The light source driver circuit 13 controls and drives the light source 14 in conformity with a PWM signal provided by the rising edge timing control circuit 15 controlling the rising edge.

The synchronization signal light source 16 emits an optical synchronization signal as shown in FIG 6, for example. Infrared LED or the like is used in respective units and an synchronization infrared light signal is radiated.

The data receiver 2 in this example is constituted by the visible light transmission filter 31, the data reception optical sensor 32, the infrared light transmission filter 33, the synchronization signal optical sensor 34, the synchronization signal detection circuit 35, the rising edge timing detection circuit 36 and related circuits. The visible light transmission filter 31 is a filter transmitting visible light modulated based on to-be-transmitted data, separating it from the synchronization signal. The data reception optical sensor 32 receives the visible light having transmitted through the visible light transmission filter 31 and converts it to an electric signal.

The infrared light transmission filter 33 is a filter transmitting through a radiated, synchronization infrared light signal, separating the visible light modulated based on to-be-transmitted data and the synchronization signal. The synchronization signal optical sensor 34 receives the infrared light having transmitted through the infrared light transmission filter 33 and converts it to an electric signal. The synchronization signal detection circuit 35 detects a synchronization signal from the electric signal output from the synchronization signal optical sensor 34.

The rising edge timing detection circuit 36 detects a rising edge of the electric signal output from the data reception optical sensor 32, modulates data beginning at the time when the rising edge has been detected, and then outputs the resulting modulated data as received data.

Exemplified processing of the second embodiment according to the present invention is briefly described forthwith. The PWM circuit 11 generates a PWM signal based on a light intensity control signal corresponding to the observed light intensity. The generated PWM signal is then transmitted to the rising edge timing control circuit 15. The rising edge timing control circuit 15 controls the rising edge of the PWM signal in conformity with to-be-transmitted data; more specifically, it controls so that the rising edge falls in a time slot for the to-be-transmitted data as shown in FIG 6, for example. The light source driver circuit 13 drives the light source 14 in conformity with this signal, and the light source 14 then emits a visible light modulated based on the to-be-transmitted data. In sync therewith, the synchronization signal light source 16 is driven according to a synchronization signal, emitting an synchronization infrared light signal.

In the data receiver 2, the synchronization signal optical sensor 34 receives the transmitted, synchronization infrared light signal via the infrared light transmission filter 33, and the synchronization signal detection circuit 35 then extracts the synchronization signal. At the same time, the data reception optical sensor 32 receives via the visible light transmission filter 31 a visible light modulated based on the to-be-transmitted data, and converts the received light to an electric signal. The rising edge timing detection circuit 36 detects a rising edge of the electric signal output from the data reception optical sensor 32, receives transmitted data in sync with the synchronization signal extracted by the synchronization signal detection circuit 35 and the timing when the rising edge is detected, and outputs it as received data.

According to this second embodiment, it is possible to adjust the observed light intensity and to secure quality communication. Moreover, using the aforementioned rising edge timing, a larger amount of data may be transmitted.

Note that while the rising edges are controlled according to the aforementioned description, the falling edges may be controlled instead, allowing data transmission in the same manner. Moreover, as with the modified example of the first embodiment, a structure of transmitting separate pieces of data for respective colors of red, green, and blue, for example, is also possible. In this case, the synchronization signal light source 16 may be structured to be shared. Moreover, in the data receiver 2, the infrared light transmission filter 33, the synchronization signal optical sensor 34, and the synchronization signal detection circuit 35 may be shared. Note that any of red, green, or blue light may be used for the synchronization signal.

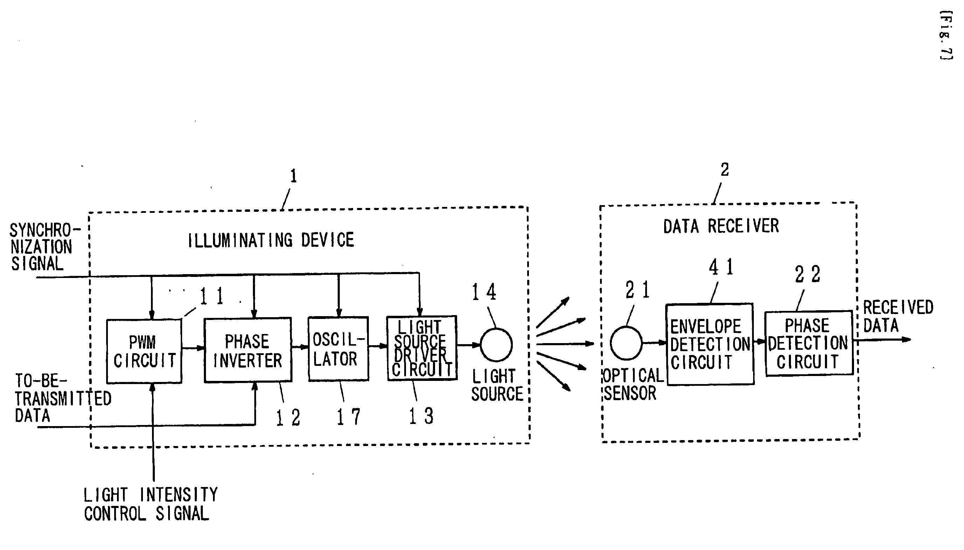

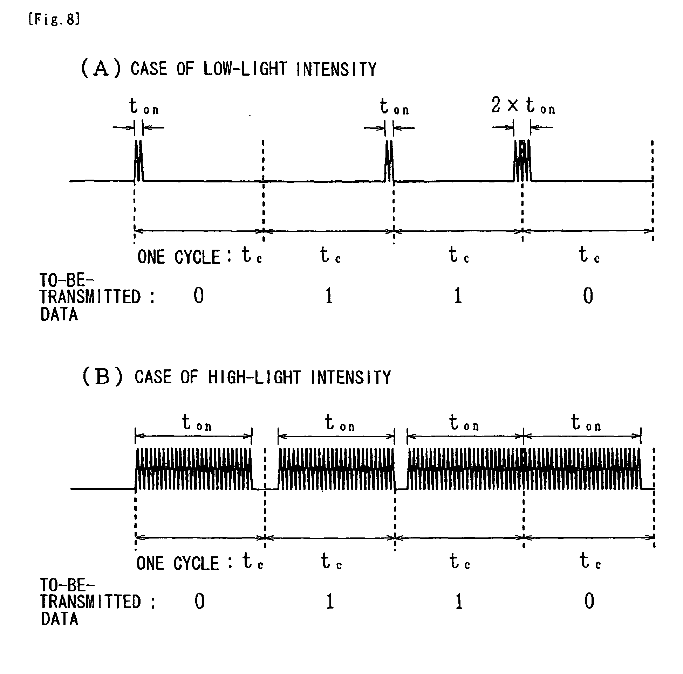

FIG. 7 is a block diagram showing a third embodiment according to the present invention, while FIG 8 is a diagram explaining an example of a signal waveform, which drives a light source. In these drawings, the same reference numerals are attached to the same elements as in FIG. 1 and repetitive descriptions thereof are omitted. 17 denotes an oscillation circuit, and 41 denotes an envelope detection circuit. This third embodiment exemplifies a non-sync subcarrier system. The subcarrier system is a method of data transmission using an optical signal oscillating with a certain frequency. Since the subcarrier system uses only the frequency, transmitted data may be selected through an electric filter extracting the frequency from the signal received on the reception side. The non-sync subcarrier system utilizes such a subcarrier but never sends a synchronization signal.

While the baseband system merely emits light when a signal is in an ON state but never emits light when the signal is in an OFF state, the subcarrier system emits light with a certain frequency (i.e., the frequency of the subcarrier) when the signal is in the ON state, for example, but never emits light when the signal is in the OFF state. On the reception side, an optical sensor converts an optical signal carried by such a subcarrier to an electric signal, which is then subjected to envelope detection, thereby reconstructing ON and OFF data. Afterwards, the phase detection circuit detects the phase thereof and then reconstructs data.

According to the subcarrier system, when pieces of data have been transmitted based on multiple subcarriers' frequencies, the respective pieces of data may be separated and received successfully using different electric filters to separate them. Therefore, in the case where multiple pieces of lighting equipment 1 or the like transmit different pieces of data, they transmit them using different subcarriers' frequencies while the data receiver 2 identifies and separates those different subcarriers' frequencies so that data from the respective pieces of lighting equipment 1 or the like can be distinguished and received.

In the structure shown in FIG. 7, the illuminating device 1 is constituted by an oscillator 17 as well as a PWM circuit 11, a light source driver circuit 13, and a light source 14. The oscillator 17 produces a signal oscillating with a subcarrier frequency when the pulse signal output from the phase inverter 12 is in an ON state.

The data receiver 2 of this example is constituted by the envelope detection circuit 41 as well as the optical sensor 21 and the phase detection circuit 22. the envelope detection circuit 41 detects an envelope of the electric signal output from the optical sensor 21 and reconstructs the PWM signal ON/OFF phase-inverted.

Exemplified processing of the third embodiment according to the present invention is briefly described forthwith. The PWM circuit 11 generates a PWM signal based on a light intensity control signal corresponding to an observed light intensity. The generated PWM signal is transmitted to the phase inverter 12, which then inverts the phase thereof according to to-be-transmitted data appropriately. The phase-inverted PWM signal is transmitted to the oscillator 17, which then generates a signal oscillating with a subcarrier frequency when the pulse signal is in an ON state. As a result, signals as shown in FIG. 8, for example, are generated. FIG. 8(A) shows the case of low-light intensity, while FIG. 8(B) shows the case of high-light intensity. In either case, a waveform with the subcarrier frequency is generated while the respective signals shown in FIG. 2 are in an ON state. In conformity with this signal, the light source driver circuit 13 drives the light source 14, which thus then emits light.

In the data receiver 2, the optical sensor 21 receives light radiated from the illuminating device 1 and converts the received light to an electric signal. This envelope detection circuit 41 detects an envelope of the electric signal and reconstructs the original ON/OFF pulse signal (phase-inverted PWM signal). The phase detection circuit 22 detects the phase of the reconstructed pulse signal and outputs a received data signal.

This third embodiment is the same as the first embodiment except for generating a waveform oscillating with the subcarrier frequency and may provide the same results as those of the first embodiment. Needless to say that separate pieces of data for respective colors of emitted lights may be transmitted as with the modified example of the first embodiment.

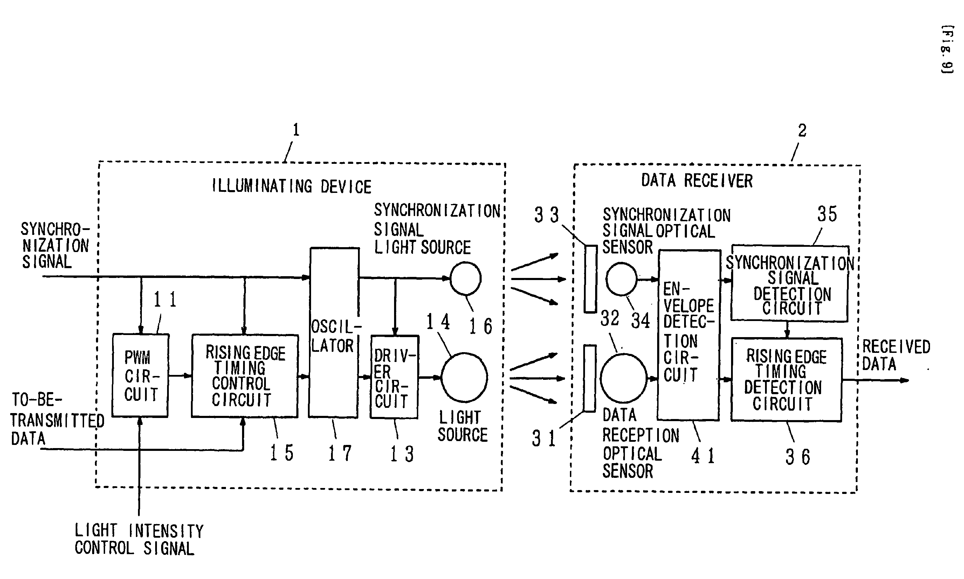

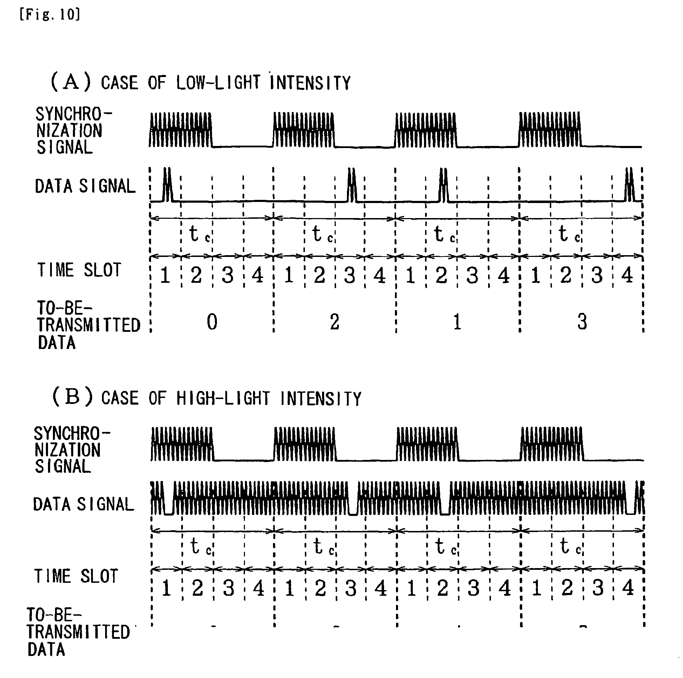

FIG. 9 is a block diagram showing a fourth embodiment according to the present invention, while FIG. 10 is a diagram explaining an example of a signal waveform, which drives a light source. In the drawings, reference numerals are the same as those in FIGS. 5 and 7, and repetitive description is omitted. The fourth embodiment is based on the case of the sync subcarrier system. The sync subcarrier system is a method of transmitting a synchronization signal based on the subcarrier system.

The illuminating device 1 includes an oscillator 17, which is deployed before the synchronization signal light source 16 and after the rising edge timing control circuit 15 and generates a signal oscillating with a subcarrier frequency for both a visible light for data transmission and an infrared light for synchronization signal transmission. The structure of the data receiver 2 includes an envelope detection circuit 41 deployed after the data reception optical sensor 32 and the synchronization signal optical sensor 34. This detects an envelope for the electric signal resulting from conversion of a received visible light and an infrared light and then provides the original data signal and synchronization signal. Note that the signal waveform is a waveform oscillating with a subcarrier frequency generated while the data signal and the synchronization signal shown in FIG. 6 are in the ON state, as shown in FIG. 10.

With this sync subcarrier system, both the synchronization signal and the data signal are generated as an oscillating signal by the oscillation circuit on the transmission side, and corresponding optical oscillating waveforms are transmitted. On the other hand, both the synchronization signal and the data signal are converted back to baseband signals by the envelope detection circuit 41 on the reception side, and then the data is synchronized and demodulated correctly.

It is apparent that even this fourth embodiment provides the same results as those with the aforementioned first to the third embodiment. Moreover, the modified examples thereof also provide the same results.

## Claims

1. A data transmission apparatus (1), comprising:
a light source (14) adapted to radiate light through the air;
a light source driving means (13) adapted to drive the light source (14);
a Pulse-Width-Modulation means (11) adapted to control the period of time of a pulse signal in which the pulse signal is on according to an input light intensity control signal, thereby generating the pulse signal; and
a phase inverter (12) adapted to phase-invert the pulse signal output from the Pulse-Width-Modulation means (11) when a to-be-transmitted binary signal is a predetermined binary value, the phase inversion being so that
(a) when the to-be-transmitted binary signal is 0, the pulse signal turns on at a beginning of a cycle (tc) and turns off partway through the cycle (tc), while when the to-be-transmitted binary signal is 1, the pulse signal turns on partway through the cycle (tc) and turns off at the end thereof; or
(b) when the to-be-transmitted binary signal is 0, the pulse signal turns off at a beginning of a cycle (tc) and turns on partway through the cycle (tc), while when the to-be-transmitted binary signal is 1, the pulse signal turns off partway through the cycle (tc) and turns on at the end thereof; and
wherein the light source driving means (13) is adapted to drive the light source (14) according to the signal output from the phase inverter (12).

2. A data transmission apparatus (1) according to claim 1 and further comprising:
an oscillator (17) adapted to generate a signal oscillating with a subcarrier frequency while the signal output from the phase inverter (12) is on, wherein the light source driving means (13) is adapted to drive the light source (14) according to the signal output from the oscillator (17).

3. A data transmission apparatus (1), comprising a plurality of data transmission apparatus (1) having the light source (14) radiating light with a different wavelength according to either Claim 1 or Claim 2.

## Patentansprüche

1. Datensendevorrichtung (1), aufweisend:
eine Lichtquelle (14), die dafür ausgelegt ist, Licht durch die Luft zu strahlen;
ein Lichtquellen-Ansteuerungsmittel (13), das dafür ausgelegt ist, die Lichtquelle (14) anzusteuern;
ein Pulsbreitenmodulationsmittel (11), das dafür ausgelegt ist, die Zeitperiode eines Pulssignals, in welcher das Pulssignal eingeschaltet ist, entsprechend einem eingegebenen Lichtintensitäts-Steuersignal zu steuern, wodurch das Pulssignal erzeugt wird; und
einen Phasenwandler (12), der dafür ausgelegt ist, das Pulssignal, das aus dem Pulsbreitenmodulationsmittel (11) ausgegeben wird, einer Phasenwandlung zu unterziehen, wenn ein zu sendendes binäres Signal einen vorgegebenen binären Wert hat, wobei die Phasenwandlung so ist, daß
(a) wenn das zu sendende binäre Signal gleich 0 ist, das Pulssignal am Beginn eines Zyklus (tc) eingeschaltet wird und im Verlauf des Zyklus (tc) ausgeschaltet wird, wohingegen, wenn das zu sendende binäre Signal gleich 1 ist, das Pulssignal im Verlauf des Zyklus (tc) eingeschaltet wird und an dessen Ende ausgeschaltet wird; oder
(b) wenn das zu sendende binäre Signal gleich 0 ist, das Pulssignal am Beginn eines Zyklus (tc) ausgeschaltet wird und im Verlauf des Zyklus (tc) eingeschaltet wird, wohingegen, wenn das zu sendende binäre Signal gleich 1 ist, das Pulssignal im Verlauf des Zyklus (tc) ausgeschaltet wird und an dessen Ende eingeschaltet wird; und
wobei das Lichtquellen-Ansteuerungsmittel (13) dafür ausgelegt ist, die Lichtquelle (14) gemäß dem Signal anzusteuern, das aus dem Phasenwandler (12) ausgegeben wird.

2. Datensendevorrichtung (1) nach Anspruch 1, weiter aufweisend:
einen Oszillator (17), der dafür ausgelegt ist, ein Signal zu erzeugen, das mit einer Zwischenträgerfrequenz oszilliert, während das Signal, das aus dem Phasenwandler (12) ausgegeben wird, eingeschaltet ist, wobei das Lichtquellen-Ansteuerungsmittel (13) dafür ausgelegt ist, die Lichtquelle (14) gemäß dem aus dem Oszillator (17) ausgegebenen Signal anzusteuern.

3. Datensendevorrichtung (1), aufweisend eine Mehrzahl an Datensendevorrichtungen (1), deren Lichtquellen (14) Licht mit unterschiedlichen Wellenlängen senden, gemäß Anspruch 1 oder Anspruch 2.

## Revendications

1. Appareil de transmission de données (1) comprenant :
- une source de lumière (14) apte à émettre de la lumière à travers l'air,
- des moyens de commande (13) de la source de lumière aptes à commander cette source de lumière (14),
- des moyens de modulation de largeur d'impulsion (11) aptes à commander la période chronologique d'un signal pulsé pendant laquelle ce signal pulsé est établi conformément à un signal de commande d'intensité lumineuse d'entrée, de manière à générer le signal pulsé, et
- un inverseur de phase (12) apte à inverser la phase du signal pulsé provenant des moyens de modulation de largeur d'impulsion (11) lorsqu'un signal binaire à transmettre, présente une valeur binaire prédéfinie, l'inversion de phase étant réalisée de sorte que :
(a) lorsque le signal binaire à transmettre est égal à 0, le signal pulsé s'établit au début d'un cycle (tc) et s'éteint pendant le cycle (tc) alors que lorsque le signal binaire à transmettre est égal à 1, le signal pulsé s'établit pendant le cycle (tc) et s'éteint à la fin de ce cycle, ou
(b) lorsque le signal binaire à transmettre est égal à 0, le signal pulsé s'éteint au début d'un cycle (tc) et s'établit pendant ce cycle (tc), alors que lorsque le signal binaire à transmettre est égal à 1, le signal pulsé s'éteint pendant le cycle (tc) et s'établit à la fin de ce cycle, et
les moyens de commande (13) de la source de lumière étant aptes à commander cette source de lumière (14) conformément au signal sortant de l'inverseur de phase (12).

2. Appareil de transmission de données (1) conforme à la revendication 1, comprenant en outre :
un oscillateur (17) apte à générer un signal oscillant avec une fréquence de sous-porteuse alors que le signal sortant de l'inverseur de phase (12) est établi, les moyens de commande (13) de la source de lumière étant aptes à commander cette source de lumière (14) conformément au signal sortant de l'oscillateur (17).

3. Appareil de transmission de données (1) comprenant plusieurs appareils de transmission de données (1) ayant une source de lumière (14) émettant de la lumière ayant différentes longueurs d'onde conformément à l'une quelconque des revendications 1 et 2.
